Europäisches Patentamt

European Patent Office

Office européen des brevets

(19)

(11) Publication number: **0 240 749**
**A2**

(12) **EUROPEAN PATENT APPLICATION**

(21) Application number: **87103306.4**

(22) Date of filing: **07.03.87**

(51) Int. Cl.⁴: **G06F 13/42** , G06F 3/06

(30) Priority: **11.04.86 US 851005**

(43) Date of publication of application:
**14.10.87 Bulletin 87/42**

(84) Designated Contracting States:
**AT BE CH DE ES FR GB GR IT LI LU NL SE**

(71) Applicant: **Symbolics, Inc.**
**11 Cambridge Center**
**Cambridge Massachusetts 02142(US)**

(72) Inventor: **Moon, David A.**
**29 Reed Street**
**Cambridge Massachusetts 02140(US)**
Inventor: **Palmer, Logan P.**
**731 Ozone Street**
**Santa Monica California 90405(US)**
Inventor: **Gawboy, Barton H.**
**715 Pacific Avenue**
**Venice California 90291(US)**
Inventor: **Lebel, Ronald J.**
**1053 Point View Street**
**Los Angeles California 90035(US)**

(74) Representative: **Patentanwaltsbüro Cohausz &**
**Florack**
**Schumannstrasse 97**
**D-4000 Düsseldorf 1(DE)**

(54) **Disk controller bus interface.**

(57) In a symbolic processing system, a standard disk controller chip which operates with 16 bit words is first converted into 32 bit words and is thereafter converted in the system processor to 36 bit words for storage in main memory. The conversion by the processor is carried out by breaking up at least one 32 bit word to form eight 36 bit words from nine 32 bit words.

EP 0 240 749 A2

# DISK CONTROLLER BUS INTERFACE

## BACKGROUND OF THE INVENTION

The present invention relates to a symbolic processing system and in particular to a method and apparatus for interfacing a disk controller to the system bus.

A symbolic processing system of the type to which the present invention relates, is disclosed in copending U.S. application 450,600 filed December 17, 1982 and now pending. That system includes a microprogrammable processor through which words are transferred between an I/O controller such as a disk controller and main memory over a bus called the LBUS which is a 36 bit bus. The memory stores words of 36 bits that are received over the LBUS.

In the system described in the copending application, in order to properly interface with the bus and memory, the disk controller had to be specially designed in order to operate with 36 bit words. However, many commercially available disk controller chips operate with 16 bit words.

While 16 bit words can be transferred over the bus and into main memory, this is a highly inefficient way of handing data and is clearly undesirable in sophisticated computer systems.

## SUMMARY OF THE INVENTION

The main object of the present invention is to provide a method and apparatus for converting the words from the disk controller to 36 bit words to enable the use of standard 16 bit disk controller chips, while efficiently utilizing the system bus and main memory.

These and other objects of the present invention are achieved in accordance with the present invention by first converting pairs of 16 bit words into 32 bit words in a buffer memory in the input output device and thereafter converting the 32 bit words into 36 bit words in the processor.

In one embodiment, the processor adds 4 bits from the second 32 bit word to the first 32 bit word, thereafter adds 8 bits from the third 32 bit word to the 28 remaining bits of the second 32 bit word and so on so that nine 32 bit words are converted into eight 36 bit words and stored in this way in memory.

In a second embodiment of the present invention, the conversion is carried out by breaking up one 32 bit word into eight four bit segments and thereafter adding one segment to each of eight successive 32 bit words to obtain eight 36 bit words from the original nine 32 bit words.

This is carried out in the data path circuitry of the processor which performs operations on the data words and includes a barrel shifter and merger.

These and other features and advantages of the present invention will be seen from the detailed description of the invention along with the attached drawing, wherein:

## BRIEF DESCRIPTION OF THE DRAWINGS

Figure 1 is a block diagram of the system according to the present invention;

Figure 2 is a block diagram of the I/O controller according to the present invention;

Figure 3 is a detailed block diagram of the converter according to the present invention;

Figure 4 shows a map of the data words from and to the buffer memory in Figure 3;

Figure 5 is a map of the data words transferred to and from the main memory from the processor;

Figure 6 is an alternative map of the words transferred between the processor and main memory.

## DETAILED DESCRIPTION OF THE INVENTION

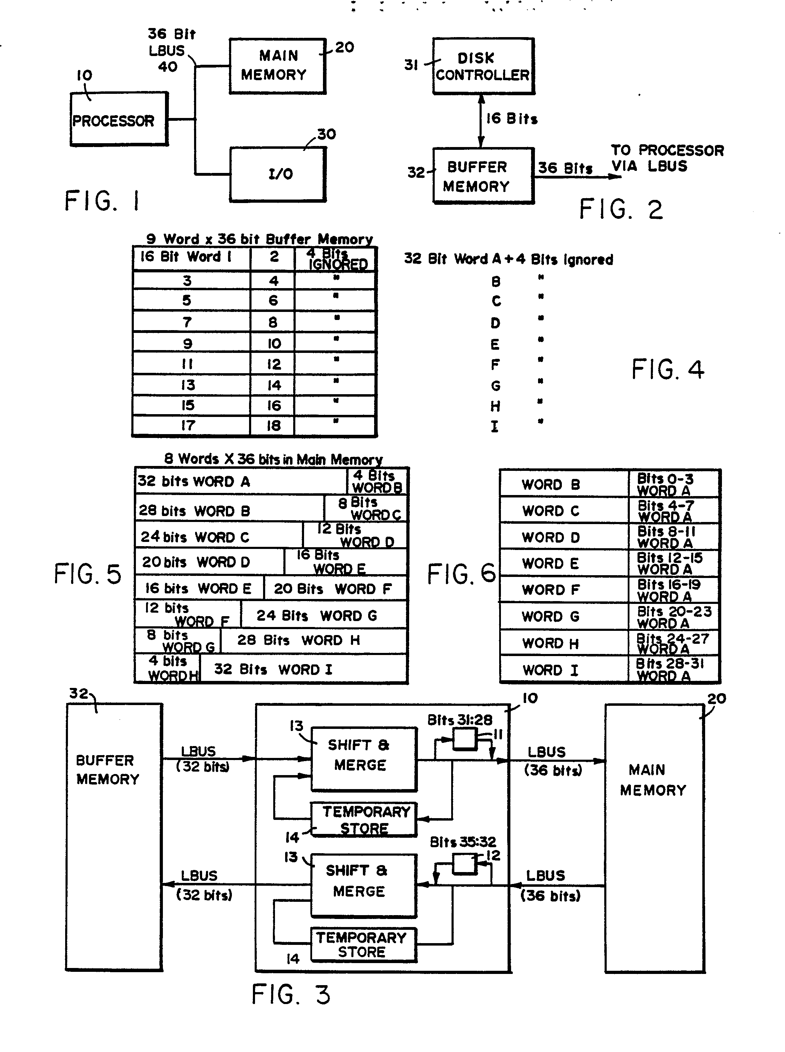

Figure 1 shows the basic system wherein an I/O controller 30 communicates with a main memory 20 through processor 10 and over a 36 bit bus LBUS 40.

Figure 2 shows the particular portion of the I/O controller, that is the disk controller 31 which is a 16 bit device and which communicates directly with a buffer memory 32. Buffer memory 32 stores 9 36 bit words and receives pairs of 16 bit words from disk controller 31 to form a 32 bit word to which it adds four bits which are ignored in order to create a 36 bit word for applying to LBUS 40.

The mapping of data between buffer memory 32 and processor 10 is shown in Fig. 4. As shown in Fig. 4, 16 bit word 1 and 2 become 32 bit word A and so on until words 17 and 18 form 32 bit word I. Words A-I are applied, along with the additional four bits to LBUS 40 and sent to the processor 10.

Processor 10 must convert the nine 32 bit words into eight 36 bit words so as to efficiently store data in main memory 20. Moreover, processor 10 must also convert the eight 36 bit words in main memory to nine 32 bit words for sending back to the disk controller 31.

In Fig. 3, this conversion is carried out by registers 11 and 12. Register 11 comprises a 4-bit register. This is used in conjunction with a barrel shifter and merger 13 and the temporary store 14 in the data path to build the 8 36 bit words.

In order to convert the eight 36 bit words into the nine 32 bit words A-I, register 12 is provided which also comprises a 4-bit register used in conjunction with the barrel shifter and merger 13 and the temporary store 14 in the data path.

In the map shown in Fig. 6, the words received from the buffer memory as shown in Fig. 4 are converted to 36 bit words in the scheme shown wherein word A is broken up into eight four bit segments which are added on to words B-I to form eight 36 bit words. The conversion to and from 32 bits to 36 bits is carried out by the same elements shown in Fig. 3.

It will be appreciated that the instant specification and claims are set forth by way of illustration and not limitation, and that various modifications and changes may be made without departing from the spirit and scope of the present invention.


**Claims**

1. In a symbolic processing system having a main memory for storing words of n bits in length, an I/O device operating with words of m bits in length wherein m<n, and a microprogrammable processor through which words are transferred between the I/O device and the memory over a bus, the improvement wherein the processor comprises means for converting the m bit words into n bit words for storage in memory including means for periodically adding increasing multiples of n-m bits of a next word to the current word being stored.

2. The system according to claim 1, wherein the I/O device operates with 16 bit words and the memory stores 36 bit words, further comprising an interface buffer memory for storing each pair of 16 bit words as a 32 bit word and for transferring the 32 bit word to the processor with 4 additional bits and wherein the converting means comprises register means for receiving the first 32 bit words and for adding 4 bits of the next 32 bit word thereto to form a 36 bit word, for thereafter receiving the 28 bits of said next word and adding 8 bits of the following 32 bit word thereto and thereafter repeatedly adding increasing multiples of 4 bits from the following words to the word being stored until nine 32 bit words are stored as eight 36 bit words.

3. In a symbolic processing system having a main memory for storing words of n bits in length, an I/O device operating with words of m bits in length wherein m<n, and a microprogrammable processor through which words are transferred between the I/O device and the memory over a bus, the improvement wherein the processor comprises means for converting the m bit words into n bit words for storage in memory including means for periodically breaking up one m bit word into n-m bit segments and adding a segment to each m bit word being stored.

4. The system according to claim 3, wherein the I/O device operates with 16 bit words and the memory stores 36 bit words, further comprising an interface buffer memory for storing each pair of 16 bit words as a 32 bit word and for transferring the 32 bit word to the processor with 4 additional bits and wherein the converting means comprises means for receiving the first 32 bit word to be stored and for breaking it up into eight 4 bit segments and means for adding one 4 bit segment to the next eight 32 bit words to be stored, whereby the nine 32 bit words are stored as eight 36 bit words.

5. In a method for symbolic processing wherein words of n bits in length are transferred through a microprogrammable processor between an I/O device and a main memory on a bus, wherein the I/O device inputs and outputs words of m bits in length, where m<n, the improvement comprising converting the m bit words of the I/O device into n bit words in the processor for storage in memory by periodically adding increasing multiples of n-m bits of a next word to the current word being stored.

6. In a method for symbolic processing wherein words of n bits in length are transferred through a microprogrammable processor between an I/O device and a main memory on a bus, wherein the I/O device inputs and outputs words of m bits in length, where m<n, the improvement comprising converting the m bit words of the I/O device into n bit words in the processor for storage in memory by periodically breaking up one m bit word into n-m bit segments and adding a segment to each m bit word being stored.

**FIG. 1**

**FIG. 2**

9 Word x 36 bit Buffer Memory

| 16 Bit Word 1 | 2 | 4 Bits IGNORED |
|---|---|---|
| 3 | 4 | " |
| 5 | 6 | " |
| 7 | 8 | " |
| 9 | 10 | " |
| 11 | 12 | " |
| 13 | 14 | " |
| 15 | 16 | " |
| 17 | 18 | " |

32 Bit Word A + 4 Bits Ignored

B "
C "
D "
E "
F "
G "
H "
I "

**FIG. 4**

8 Words X 36 bits in Main Memory

| | |
|---|---|
| 32 bits WORD A | 4 Bits WORD B |
| 28 bits WORD B | 8 Bits WORD C |
| 24 bits WORD C | 12 Bits WORD D |
| 20 bits WORD D | 16 Bits WORD E |
| 16 bits WORD E | 20 Bits WORD F |
| 12 bits WORD F | 24 Bits WORD G |
| 8 bits WORD G | 28 Bits WORD H |
| 4 bits WORD H | 32 Bits WORD I |

**FIG. 5**

| WORD B | Bits 0-3 WORD A |
|---|---|
| WORD C | Bits 4-7 WORD A |
| WORD D | Bits 8-11 WORD A |
| WORD E | Bits 12-15 WORD A |
| WORD F | Bits 16-19 WORD A |
| WORD G | Bits 20-23 WORD A |
| WORD H | Bits 24-27 WORD A |
| WORD I | Bits 28-31 WORD A |

**FIG. 6**

**FIG. 3**